# EUROPEAN PATENT APPLICATION

(11) **EP 4 764 591 A1**
(43) Date of publication of application: **24.06.2026**
(21) Application number: 24222531.6
(22) Date of filing: 20.12.2024
(51) Int. Cl.: G01S 7/03, G01S 7/35, G01S 13/536

(54) **RADAR SYSTEM**

(71) Applicant: Xavveo GmbH, 13355 Berlin (DE)
(72) Inventor: MEISTER, Stefan, 12587 Berlin (DE); KEIL, Ulrich, 12249 Berlin (DE); MEUER, Christian, 12157 Berlin (DE)
(74) Representative: Fischer, Uwe

(57) **Abstract**

The present invention inter alia relates to a radar system (1) comprising a plurality of radar transmission units (10), a plurality of radar reception units (20), and a central unit (30) which is optically connected to the radar transmission units (10) and the radar reception units (20), wherein the central unit (30) comprises at least one Mach-Zehnder amplitude modulator (34) having an optical input port and two optical output ports, and a controller (31), wherein the Mach-Zehnder amplitude modulator (34) is controlled by the controller (31) to operate at a given operational point and outputs a first modulated optical output signal (Sol) and a second modulated optical output signal (So2) in response to an optical input radiation (Pi) and an electrical modulation signal, wherein the first modulated optical output signal (Sol) and the second modulated optical output signal (So2) are complementary to each other, and wherein at least one of said plurality of radar transmission and radar reception units (10, 20) is provided with the first modulated optical output signal (Sol) and at least one other unit of said plurality of radar transmission and radar reception units (10, 20) is provided with the second modulated optical output signal (So2).

## Description

The present invention relates to radar systems, radar transmission units, radar reception units, central units of radar systems, and sensor units.

### Background of the invention

International patent application WO 2023/202878 A1 discloses a radar system that comprises a central unit, a radar transmission unit, and a radar reception unit. The central unit comprises a laser and a Mach-Zehnder amplitude modulator having an optical input port and an optical output port. The Mach-Zehnder amplitude modulator is configured to switch the optical input power of the laser between on and off.

### Objective of the present invention

An objective of the present invention is to propose radar systems and components with reduced energy consumption.

### Brief summary of the invention

A first exemplary embodiment of the present invention relates to a radar system comprising a plurality of radar transmission units, a plurality of radar reception units, and a central unit which is optically connected to the radar transmission units and the radar reception units, wherein the central unit comprises at least one Mach-Zehnder amplitude modulator having an optical input port and two optical output ports, and a controller, wherein the Mach-Zehnder amplitude modulator is controlled by the controller to operate at a given operational point and outputs a first modulated optical output signal and a second modulated optical output signal in response to an optical input radiation and an electrical modulation signal, wherein the first modulated optical output signal and the second modulated optical output signal are complementary to each other, and wherein at least one of said plurality of radar transmission and radar reception units is provided with the first modulated optical output signal and at least one other unit of said plurality of radar transmission and radar reception units is provided with the second modulated optical output signal.

An advantage of the above exemplary embodiment is that it reduces energy consumption by preventing the waste of laser radiation. A Mach-Zehnder amplitude modulator with a single output port can only switch between on and off. In the off state, the laser radiation is unused and therefore wasted. In contrast, the Mach-Zehnder amplitude modulator in the above embodiment does not simply switch between on and off but instead redirects the radiation to one of its two output ports. The modulated optical output signals exhibit amplitude complementarity: as the intensity of one optical signal increases, the intensity of the other decreases, thereby maintaining a balance or specific total energy. In other words, the incoming laser radiation is optimally utilized. More specifically, the number of remote units that can be supplied with modulated optical output signals is doubled compared to prior art solutions.

The Mach-Zehnder amplitude modulator is preferably controlled by the controller to operate at the quadrature point.

The optical output ports of the Mach-Zehnder amplitude modulator are preferably formed by output ports of a 2x2 coupler. The 2x2 coupler may be a directional or MMI coupler.

The radar system may comprise sensor modules which each have a radar transmission unit and a radar reception unit. One of these units is preferably provided with the first modulated optical output signal, and the other with the second modulated optical output signal. The first modulated optical output signal may serve as a control signal for the transmission of radar radiation, and the second modulated optical output signal may serve as a reference signal for the evaluation of received radar radiation, or vice versa.

The plurality of radar transmission and radar reception units that is provided with the first modulated optical output signal, forms a first group of units, and the plurality of radar transmission and radar reception units that is provided with the second modulated optical output signal, forms a second group of units. Preferably, all radar transmission and radar reception units in at least one of these groups are equipped with a complementarity annihilator to remove the complementarity between the modulated optical output signals. The use of a complementarity annihilator can help achieve coherence in operation, enabling all radar transmission units in both groups to be supplied with the same radar driver signal and all radar reception units in both groups to receive the same radar reference signal.

Each unit in either the first or second group may include a polarity inverter that functions as a complementarity annihilator, inverting the polarity of a (preferably bias-free) electrical reception signal extracted by the respective unit from the corresponding modulated optical output signal. The extraction of the electrical reception signal may be carried out by a transimpedance amplifier.

Alternatively, all units in both groups may include a frequency multiplier that removes the complementarity of the modulated optical output signals. This is achieved by multiplying the frequencies of the corresponding electrical reception signals by an even number. For instance, doubling the frequencies removes the complementarity.

The controller is preferably configured to adjust the operational point of the Mach-Zehnder amplitude modulator on the basis of at least one detection signal.

The at least one detection signal or at least one of the detection signals is preferably provided by a remote detector located at one of said plurality of transmission and reception units, the remote detector measuring the first or second modulated optical output signal received from the central unit.

Also, the least one detection signal or at least one of the detection signals may be provided by a tap detector located at the central unit and connected to one of the optical output ports of the Mach-Zehnder amplitude modulator.

The controller may be configured to control the Mach-Zehnder amplitude modulator to provide the first and second modulated optical output signals with amplitude modulation, resulting in a corresponding amplitude modulation of the detection signals.

The controller may be configured to adjust the operational point of the Mach-Zehnder amplitude modulator based on the intensity of a given harmonic of at least one of the detection signals.

Said given harmonic of the detection signal is preferably the first harmonic.

The controller may be configured to adjust the operational point of the Mach-Zehnder amplitude modulator on the basis of at least two detection signals.

The controller may be configured to adjust the operational point of the Mach-Zehnder amplitude modulator on the basis of the intensities of said at least two detection signals.

The controller may be configured to adjust the intensity of the optical input radiation provided to the Mach-Zehnder amplitude modulator or the output radiation leaving the Mach-Zehnder amplitude modulator on the basis of the intensity of said at least one detection signal or on the basis of the intensities of said at least two detection signals.

The controller may be configured to control at least one optical attenuator located upstream or downstream of the Mach-Zehnder amplitude modulator on the basis of the intensity of said at least one detection signal or on the basis of the intensities of said at least two detection signals.

One of said at least two detection signals may be provided by a first tap detector located at the central unit and coupled to one of the optical output ports of the Mach-Zehnder amplitude modulator. Another of said at least two detection signals may be provided by a second tap detector located at the central unit and coupled to the other optical output port of the Mach-Zehnder amplitude modulator.

One of said at least two detection signals may be provided by a remote detector, which is part of one of the pluralities of radar transmission and radar reception units and is associated with the first modulated optical output signal. Another of said at least two detection signals may be provided by another remote detector, which is part of another of the pluralities of radar transmission and radar reception units and is associated with the second output signal.

The Mach-Zehnder amplitude modulator may comprise a 3dB splitter, a 2x2 coupler, a first internal waveguide connecting a first output port of the 3dB splitter with a first input port of the 2x2 coupler, a second internal waveguide connecting a second output port of the 3dB splitter with a second input port of the 2x2 coupler, and at least one phase shifter assigned to the first or second internal waveguide.

The 3dB splitter may be a 3dB-MMI-coupler. The 2x2 coupler may be a directional coupler or a MMI coupler.

Another exemplary embodiment of the present invention relates to a radar transmission or reception unit. The unit comprises a complementarity annihilator for removing complementarity between modulated optical output signals, for instance the first and second modulated optical output signal provided by the central unit of the radar system described above.

Another exemplary embodiment of the present invention relates to a central unit, for instance for a radar system as described above, wherein the central unit is configured to be connected to a plurality of radar transmission units and a plurality of radar reception units, wherein the central unit comprises at least one Mach-Zehnder amplitude modulator having an optical input port and two optical output ports, and a controller, wherein the Mach-Zehnder amplitude modulator is controlled by the controller to operate at a given operational point and outputs a first modulated optical output signal and a second modulated optical output signal in response to an optical input radiation and an electrical modulation signal, and wherein the first modulated optical output signal and the second modulated optical output signal are complementary to each other.

The central unit may further comprise a PIC (photonic integrated chip) or EPIC (electronic photonic chip) in which at least the Mach-Zehnder amplitude modulator is integrated.

The controller is preferably an electronic circuit, for instance on CMOS basis. The controller may be a microprocessor. The controller may also be integrated in said EPIC.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Figure 1: depicts an exemplary embodiment of a radar system according to the present invention, the radar system comprising exemplary embodiments of radar transmission units and radar reception units according to the present invention,
- Figure 2: depicts modulated optical output signals that are complementary to each other,
- Figure 3: depicts an exemplary embodiment of a modulation signal that may serve as a radar driver signal and a radar reference signal, and
- Fig. 4-5: exemplary embodiments of complementarity annihilators embedded in exemplary embodiments of radar transmission and/or receptions units according to the present invention.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

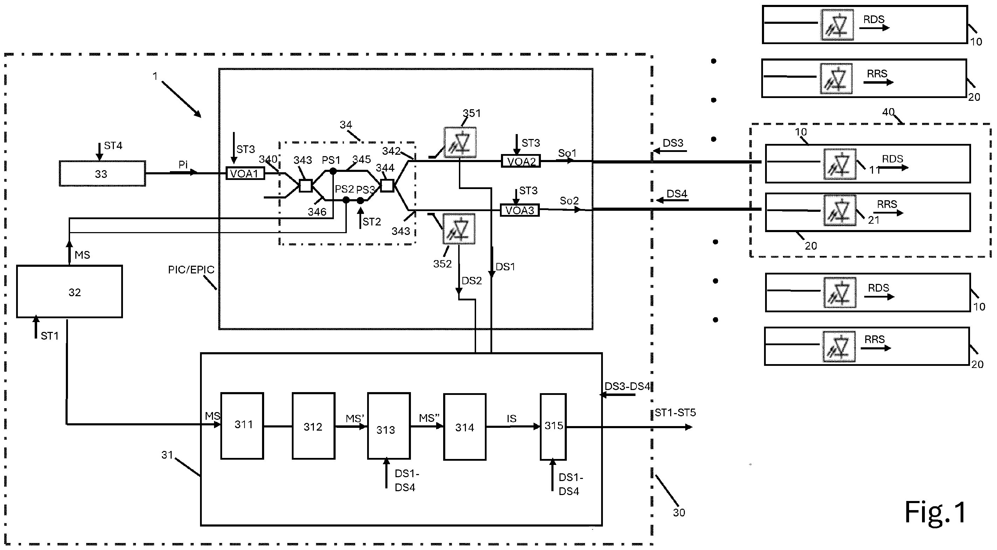

Figure 1 depicts a radar system 1 that comprises a plurality of radar transmission units 10, a plurality of radar reception units 20, and a central unit 30. The radar system 1 may be a FMCW- (Frequency Modulated Continuous Wave) radar system 1 and may evaluate a frequency shift between emitted radar radiation and received radar radiation.

One or more radar transmission units 10 may be paired with an individually assigned radar reception unit 20 to form a sensor unit 40. Figure 1 illustrates one of such sensor units 10 as an example.

The central unit 10 comprises a controller 31, an electrical signal generator 32, a laser 33 and a Mach-Zehnder amplitude modulator 34.

The Mach-Zehnder amplitude modulator 34 has an optical input port 340 and two optical output port 341 and 342. The optical input port 340 is connected to the laser 33 and receives optical input radiation Pi. The laser 33 may be a CW laser 33 which provides unmodulated optical radiation Pi. The laser 33 may be controlled by the controller 31 to provide a given output power.

The Mach-Zehnder amplitude modulator 34 comprises a 3dB splitter (e.g. a 1x2-MMI-coupler) 343, a 2x2 coupler (e.g. a 2x2-MMI-coupler) 344, a first internal waveguide 345 connecting a first output port of the 3dB splitter with a first input port of the 2x2 coupler, a second internal waveguide 346 connecting a second output port of the 3dB splitter with a second input port of the 2x2 coupler, and for instance three phase shifters PS1-PS3 assigned to the internal waveguides 345 and 346.

The optical output ports 341 and 342 output a first modulated optical output signal So1 and a second modulated optical output signal So2 in response to the optical input radiation Pi and an electrical modulation signal MS. The modulated optical output signals So1 and So2 are complementary to each other. If for instance the intensity of the first modulated optical output signal So1 increases, the intensity of the second modulated optical output signal So2 decreases, and vice versa.

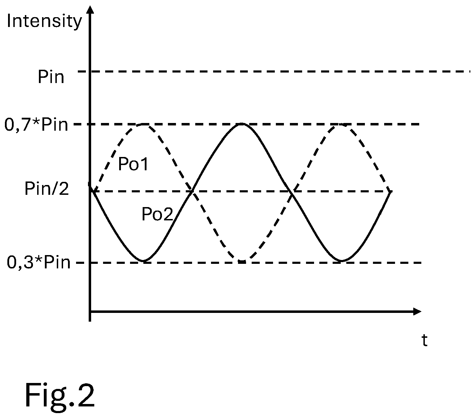

Figure 2 illustrates the first modulated optical output signal So1 and the second modulated optical output signal So2 in response to a sinusoidal electrical modulation signal MS. The modulated optical output signals So1 and So2 exhibit amplitude complementarity: as the intensity of one optical signal increases, the intensity of the other decreases, thereby maintaining a balance or specific total energy. In Figure 2, the sum of the intensities of the modulated optical output signals So1 and So2 equals the intensity of the input radiation Pi (assuming negligible optical losses), resulting in a constant total intensity.

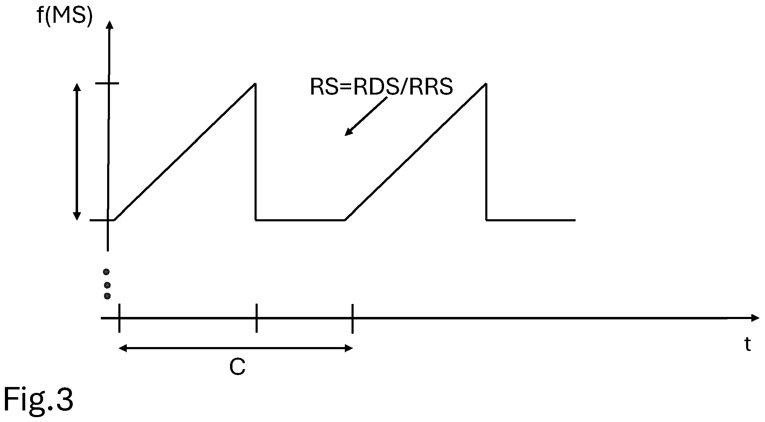

The electrical modulation signal MS is generated by the electrical signal generator 32. The electrical modulation signal MS preferably has a constant amplitude and a varying frequency. The frequency of the electrical modulation signal MS may be in the range between 19 and 21 GHz. For instance, the electrical modulation signal MS may be an electrical frequency ramp signal RS that may serve as a radar driver signal RDS and a radar reference signal RRS for the FMCW radar operation. The ramp signal RS may be a periodic signal as shown in Figure 3. The frequency f of the periodic electrical ramp signal RS may continuously increase or decrease over time t at least during an active segment of each periodic cycle C. Each periodic cycle C may further include a passive segment during which the frequency of the ramp signal RS is stable. During the passive segments, the radar emission may be disabled.

The controller 31 may adjust the amplitude of the electrical modulation signal MS in order to obtain desired characteristics of the modulated optical output signals So1 and So2, by applying a first control signal ST1. For instance, the controller 31 may limit the amplitude of the electrical modulation signal MS in order to avoid the generation of undesired harmonics in the modulated optical output signals So1 and So2. For example, an amplitude of the electrical modulation signal MS that results in an intensity modulation between 30 % and 70 % (see Figure 3) of the intensity of the input radiation Pi may sufficiently limit harmonics that might later disturb radar measurements.

In the exemplary embodiment of Figure 1 two of the phase shifters PS1 and PS2 are connected to the signal generator 32 which applies the electrical modulation signal MS with inverted polarities to the phase shifters PS1 and PS2. Alternatively, the signal generator 32 may apply the electrical modulation signal MS to only one of these phase shifters PS1 and PS2, for instance the upper phase shifter PS1. In the latter case, the lower phase shifter PS2 may be omitted.

In the exemplary embodiment of Figure 1 the third phase shifter PS3 is connected to the controller 31. The controller 31 may adjust the phase shift introduced by the third phase shifter PS3 in order to achieve a desired operational point of the Mach-Zehnder amplitude modulator 34, by applying a second control signal ST2. The operational point is preferably the quadrature point.

In the exemplary embodiment of Figure 1 the central unit 10 also comprises one or more variable optical attenuators VOA1-VOA3. The controller 31 may adjust the attenuation of the attenuators VOA1-VOA3 in order to achieve a desired optical output power of the modulated optical output signals So1 and So2, by applying a third control signal ST3. Of course, three variable optical attenuators VOA1-VOA3 are not mandatory: The optical attenuator VOA1 alone or the optical attenuators VOA2 and VOA3 may be sufficient to achieve the desired attenuation.

In the exemplary embodiment of Figure 1, the central unit 10 may also comprise internal monitor diodes 351 and 352. The monitor diodes 351 and 352 are tap-coupled to output waveguides that are connected to the optical output ports 341 and 342 of the Mach-Zehnder amplitude modulator 34. The monitor diodes 351 and 352 provide detection signals DS1 and DS2 that are transmitted to the controller 31.

In the exemplary embodiment of Figure 1, the central unit 10 may further receive detection signals DS3 from detectors 11 located in one or more remote radar transmission and/or radar reception units 10/20 that receive the first modulated optical output signal So1, as well as detection signals DS4 from detectors 21 located in one or more remote radar transmission and/or radar reception units 10/20 that receive the second modulated optical output signal So2. The detection signals DS3 and DS4 may be returned to the central unit 10 via the same fiber that transmits the first or second modulated optical output signal, or additional fibers that are not shown in Figure 1.

The controller 31 may be configured to provide one or more of the following modes of operation:

### 1. Single detection signal / DC evaluation:

The controller 31 may evaluate the intensity of one of the detection signals DS1-DS4 and adjust the output power of the laser 33 and/or the attenuation of the attenuator(s) VOA1-VOA3 in order to achieve a given intensity of the respective detection signal, by modifying the third control signal ST3 for the attenuator(s) VOA1-VOA3 and/or applying a corresponding fourth control signal ST4 to the laser 33.

### 2. Single detection signal / evaluation at modulation frequency:

The controller 31 may evaluate the intensity of one of the detection signals DS1-DS4 at the modulation frequency. For instance, the controller 31 may adjust the amplitude of the electrical modulation signal MS in order to obtain a given intensity modulation, by modifying the first control signal ST1.

### 3. Single detection signal / evaluation of a harmonic frequency:

The controller 31 may evaluate the intensity of one of the detection signals DS1-DS4 with respect to one or more harmonics of the modulation frequency. In order to reduce the intensity of such harmonics, the controller 31 may adjust the amplitude of the electrical modulation signal MS by modifying the first control signal ST1, and/or adjust the phase shift introduced by the third phase shifter PS3 in order to re-align with the desired quadrature point.

### 4. Single detection signal / evaluation of first harmonic frequency:

The controller 31 may evaluate the intensity of one of the detection signals DS1-DS4 with respect to the first harmonic of the modulation frequency. This first harmonic indicates whether the Mach-Zehnder amplitude modulator 34 is operating at the quadrature point. For instance, the controller 31 may adjust the phase shift introduced by the third phase shifter PS3 in order to minimize the first harmonic in the detection signal and thereby re-align the actual operational point with the quadrature point, by modifying the second control signal ST2.

To enable the controller 31 to measure the intensity of the detection signals DS1-DS4 with respect to the first harmonic, the signal generator 32 may provide the modulation signal MS to the controller 31.

The controller 31 may include a frequency doubler 311 and a phase shifter 312, which generate a modified modulation signal MS'. A mixer 313 combines the modified modulation signal MS' with the respective detection signal DS1-DS4 and generates a mixed signal MS". The mixed signal MS" may then be low-pass filtered (filter 314) to produce an intensity signal IS that represents the amplitude of the detection signal at the first harmonic of the modulation frequency. A controller module 315 evaluates the intensity signal IS and modifies the second control signal ST2 if necessary.

### 5. Two detection signals / DC evaluation:

The controller 31 may determine the intensity of one detection signal that relates to the first modulated optical output signal So1 (e. g. DS1 or DS3), and the intensity of one detection signal (e. g. DS2 or DS4) that relates to the second modulated optical output signal So2. The controller 31 can then adjust the phase shift introduced by the third phase shifter PS3 to ensure that both intensities are equal, by modifying the second control signal ST2.

The controller 31 may also add the intensities and calculate an intensity sum. The controller 31 may adjust the output power of the laser 33 or the attenuation of the attenuator(s) VOA1-VOA3 in order to achieve a given intensity sum, by modifying the third control signal ST3 and/or the fourth control signal ST4.

### 6. Two detection signals / evaluation for modulation frequency:

The controller 31 may determine the amplitude of one detection signal (e. g. DS1 or DS3) that relates to the first modulated optical output signal So1, and the amplitude of another detection signal (e. g. DS2 or DS4) that relates to the second modulated optical output signal So2, with respect to the modulation frequency.

The controller 31 may add the intensities and calculate an amplitude sum. The controller 31 may adjust the output power of the laser 33 or the attenuation of the attenuator(s) VOA1-VOA3 in order to achieve a given amplitude sum, by modifying the third control signal ST3 and/or the fourth control signal ST4.

The controller 31 may further adjust the amplitude of the electrical modulation signal MS in order to obtain a given intensity modulation of for instance 30 % and 70 % of the intensity sum for of each of the modulated optical output signals So1 and So2, by modifying the first control signal ST1.

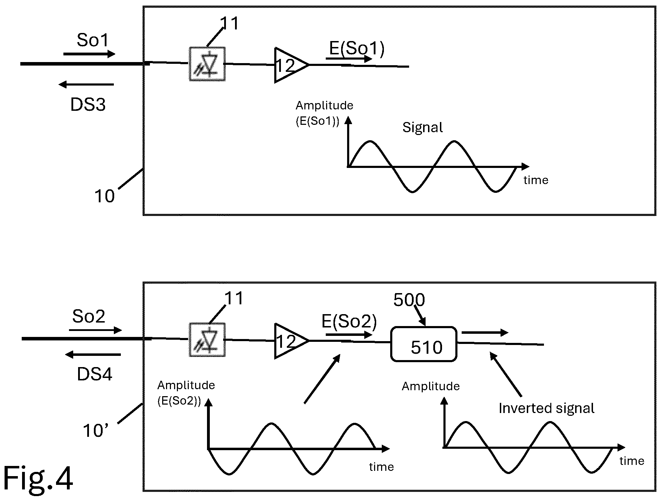

Figure 4 depicts a radar transmission unit 10 that receives the first modulated optical output signal So1, and another radar transmission unit 10' that receives the second modulated optical output signal So2. The detectors 11, along with downstream transimpedance amplifiers 12, convert the modulated optical output signals So1 and So2 into corresponding electrical reception signals E(Sol) and E(So2). The explanations provided further below apply correspondingly to radar reception units supplied with the complementary modulated optical output signals So1 and So2.

In order to achieve a coherence in the operation of all radar transmission units 10 and a coherence in the operation of all radar reception units 20, all radar transmission units 10 should be provided with the same radar driver signal RS and all radar reception units 20 should be provided with the same corresponding reference RRS signal. Therefore, the amplitude complementarity of the modulated optical output signals So1 and So2 needs to be annihilated by complementarity annihilators 500. This can be achieved in different ways:

### 1. Polarity inverter (Figure 4):

In the exemplary embodiment of Figure 4, the complementarity annihilators 500 are formed by inverters 510. The inverters 510 are assigned to either the first modulated optical output signals So1 or the second modulated optical output signals So2. The inverters 510 invert the polarity of the assigned (preferably bias-free) electrical reception signals E(Sol) or E(So2). The inversion removes the complementarity between the electrical reception signals with respect to one another.

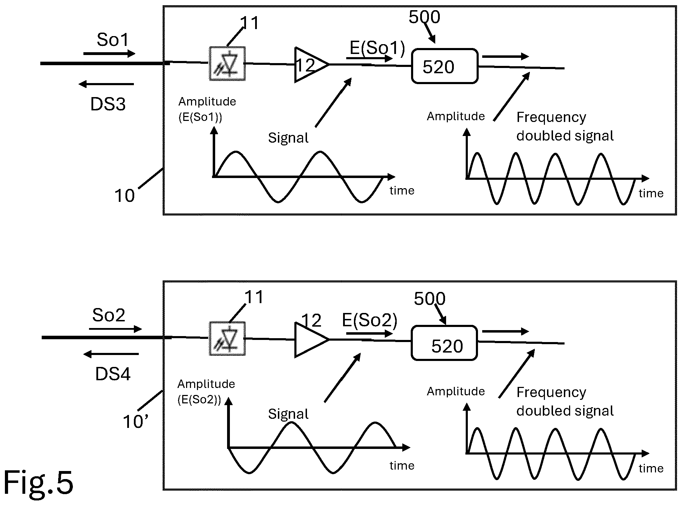

### 2. Frequency multiplication (Figure 5):

In the exemplary embodiment of Figure 5, the complementarity annihilators 500 are formed by frequency multiplexers 520. The frequency multiplexers 520 are assigned to both the first modulated optical output signals So1 and the second modulated optical output signals So2. In order to remove the complementarity of the modulated optical output signals So1 and So2, the frequencies of the corresponding electrical reception signals E(Sol) and E(So2) are multiplied by an even number. For instance, doubling of the frequencies removes the complementarity, as shown in Figure 6.

Referring again to Figure 1, the central unit 30 may comprise a PIC (photonic integrated chip) in which at least the Mach-Zehnder amplitude modulator 34 is integrated. Preferably, the monitor diodes 351 and 352 and the variable optical attenuators VOA1-VOA3 are also integrated in the PIC.

Alternatively, the central unit 30 may comprise an EPIC (electronic photonic chip) in which the Mach-Zehnder amplitude modulator 34 as well as the other optical components mentioned above, the controller 31 and the electrical signal generator 32 are integrated. The controller is preferably an electronic circuit, for instance on CMOS basis. The controller may be a microprocessor.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

Furthermore, the terms 'first,' 'second,' 'third,' and so on are used to distinguish between items of the same kind. However, none of these terms imply a specific number of such items. These terms do not imply that all such entities items must be present. For example, the 'first' and 'fourth' items may be present even if the 'second' and 'third' are absent."

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one ore more) of the present dependent claims (regardless of the present claim structure). Therefore, the applicant may direct further patent claims towards other claim combinations at a later stage of the prosecution.

## Claims

1. A radar system (1) comprising a plurality of radar transmission units (10), a plurality of radar reception units (20), and a central unit (30) which is optically connected to the radar transmission units (10) and the radar reception units (20),
wherein the central unit (30) comprises at least one Mach-Zehnder amplitude modulator (34) having an optical input port and two optical output ports, and a controller (31),
wherein the Mach-Zehnder amplitude modulator (34) is controlled by the controller (31) to operate at a given operational point and outputs a first modulated optical output signal (So1) and a second modulated optical output signal (So2) in response to an optical input radiation (Pi) and an electrical modulation signal, wherein the first modulated optical output signal (So1) and the second modulated optical output signal (So2) are complementary to each other, and
wherein at least one of said plurality of radar transmission and radar reception units (10, 20) is provided with the first modulated optical output signal (So1) and at least one other unit of said plurality of radar transmission and radar reception units (10, 20) is provided with the second modulated optical output signal (So2) .

2. The radar system (1) of claim 1
wherein the plurality of radar transmission and radar reception units (10, 20) that is provided with the first modulated optical output signal (So1), forms a first group of units,
wherein the plurality of radar transmission and radar reception units (10, 20) that is provided with the second modulated optical output signal (So2), forms a second group of units, and
wherein all radar transmission and radar reception units (20) of at least one of these groups are equipped with a complementarity annihilator (500) to remove the complementarity between the modulated optical output signals.

3. The radar system (1) of any of the preceding claims
wherein the controller (31) is configured to adjust the operational point of the Mach-Zehnder amplitude modulator (34) on the basis of at least one detection signal (DS1, DS2, DS3, DS4).

4. The radar system (1) of claim 3
wherein the at least one detection signal (DS1, DS2, DS3, DS4) or at least one of the detection signals (DS1, DS2, DS3, DS4) is provided by a remote detector (11) located at one of said plurality of transmission and reception units (10, 20), the remote detector measuring the first or second modulated optical output signal (So1, So2) received from the central unit (30).

5. The radar system (1) of any of the preceding claims 4-5
wherein the at least one detection signal (DS1, DS2, DS3, DS4) or at least one of the detection signals (DS1, DS2, DS3, DS4) is provided by a tap detector (351, 352) located at the central unit and connected to one of the optical output ports of the Mach-Zehnder amplitude modulator (34).

6. The radar system (1) of any of the preceding claims
wherein the controller (31) is configured to control the Mach-Zehnder amplitude modulator (34) to provide the first and second modulated optical output signals (So2) with amplitude modulation, resulting in a corresponding amplitude modulation of the detection signals (DS1, DS2, DS3, DS4), and
wherein the controller (31) is configured to adjust the operational point of the Mach-Zehnder amplitude modulator (34) based on the intensity of a given harmonic of at least one of the detection signals (DS1, DS2, DS3, DS4).

7. The radar system (1) of any of the preceding claims
wherein the controller (31) is configured to adjust the operational point of the Mach-Zehnder amplitude modulator (34) on the basis of at least two detection signals (DS1, DS2, DS3, DS4).

8. The radar system (1) of claim 7
wherein the controller (31) is configured to adjust the operational point of the Mach-Zehnder amplitude modulator (34) on the basis of the intensities of said at least two detection signals (DS1, DS2, DS3, DS4).

9. The radar system (1) of any of the preceding claims
wherein the controller (31) is configured to adjust the intensity of the optical input radiation (Pi) provided to the Mach-Zehnder amplitude modulator (34) or the output radiation leaving the Mach-Zehnder amplitude modulator (34) on the basis of the intensity of said at least one detection signal (DS1, DS2, DS3, DS4) or on the basis of the intensities of said at least two detection signals (DS1, DS2, DS3, DS4).

10. The radar system (1) of any of the preceding claims
wherein the controller (31) is configured to control at least one optical attenuator (VOA1-VOA3) located upstream or downstream of the Mach-Zehnder amplitude modulator (34) on the basis of the intensity of said at least one detection signal (DS1, DS2, DS3, DS4) or on the basis of the intensities of said at least two detection signals (DS1, DS2, DS3, DS4).

11. The radar system (1) of any of the preceding claims
wherein one of said at least two detection signals (DS1, DS2, DS3, DS4) is provided by a first tap detector located at the central unit and coupled to one of the optical output ports of the Mach-Zehnder amplitude modulator (34), and
wherein another of said at least two detection signals (DS1, DS2, DS3, DS4) is provided by a second tap detector located at the central unit and coupled to the other optical output port of the Mach-Zehnder amplitude modulator (34).

12. The radar system (1) of any of the preceding claims
wherein one of said at least two detection signals (DS1, DS2, DS3, DS4) is provided by a remote detector, which is part of one of the pluralities of radar transmission and radar reception units (20) and is associated with the first modulated optical output signal (So1), and
wherein another of said at least two detection signals (DS1, DS2, DS3, DS4) is provided by another remote detector, which is part of another of the plurality of radar transmission and radar reception units (10, 20) and is associated with the second modulated output signal (So2).

13. The radar system (1) of any of the preceding claims
wherein the Mach-Zehnder amplitude modulator (34) comprises a 3dB splitter (343), a 2x2 coupler (344), a first internal waveguide (345) connecting a first output port of the 3dB splitter with a first input port of the 2x2 coupler, a second internal waveguide (346) connecting a second output port of the 3dB splitter with a second input port of the 2x2 coupler, and at least one phase shifter (PS1-PS3) assigned to the first or second internal waveguide.

14. Radar transmission or reception unit
wherein the unit comprises a complementarity annihilator (500) for removing complementarity between modulated optical output signals, for instance the first and second modulated optical output signal (So1, So2) provided by the central unit (30) of a radar system (1) according to any of the preceding claims.

15. Central unit (30), for instance for a radar system (1) according to of any of the preceding claims,
wherein the central unit (30) is configured to be connected to a plurality of radar transmission units (10) and a plurality of radar reception units (20),
wherein the central unit (30) comprises at least one Mach-Zehnder amplitude modulator (34) having an optical input port and two optical output ports, and a controller (31),
wherein the Mach-Zehnder amplitude modulator (34) is controlled by the controller (31) to operate at a given operational point and outputs a first modulated optical output signal (So1) and a second modulated optical output signal (So2) in response to an optical input radiation (Pi) and an electrical modulation signal, and
wherein the first modulated optical output signal (So1) and the second modulated optical output signal (So2) are complementary to each other.
